# EUROPÄISCHE PATENTSCHRIFT

(11) **EP 1 945 415 B1**
(45) Veröffentlichungstag und Bekanntmachung des Hinweises auf die Patenterteilung: **29.08.2012**
(21) Anmeldenummer: 06804799.2
(22) Anmeldetag: 10.10.2006
(51) Int. Cl.: B25J 15/00, B65G 47/90

(54) **PNEUMATISCHER AKTOR**
PNEUMATIC ACTUATOR
ACTUATEUR PNEUMATIQUE

(30) Priorität: 10.10.2005 CH 16372005
(43) Veröffentlichungstag der Anmeldung: 23.07.2008
(73) Patentinhaber: Prospective Concepts AG, 8152 Glattbrugg (CH)
(72) Erfinder: SCHALLER, Werner, CH-8965 Berikon (DE)
(74) Vertreter: Stump, Beat
(86) Internationale Anmeldenummer: PCT/CH2006/000560
(87) Internationale Veröffentlichungsnummer: WO 2007/041887

(56) Entgegenhaltungen:
- DE-A1- 2 615 087
- US-A- 3 713 685
- US-A- 5 245 885
- US-A1- 2002 002 867

## Beschreibung

Die vorliegende Erfindung betrifft einen pneumatischen Greifer aus mindestens einem pneumatischen Strukturelement nach dem Oberbegriff des Patentanspruches 1.

Die der vorliegenden Erfindung am nächsten kommenden Vorrichtungen sind bekannt aus US 3,056,625, Timmerman (D1) und JP 05261687, Bridgestone (D2).

D1 beschreibt einen Greifer für Waren, der als Bügel ausgebildet ist und an seinen seitlich vertikal angeordneten Abschnitten über Scharniere beweglich gehaltene Greifer besitzt. Je zwischen einem vertikal angeordneten Abschnitt und dem zugeordneten Greifer befindet sich ein aufblasbarer Balg, der unter Druck den Greifer vom vertikalen Abschnitt gegen das Greiferinnere wegdrückt, so dass die Ware durch die Greifer erfasst wird.

In D2 ist ebenfalls ein bügelartig ausgebildeter Greifer mit seitlich vertikal angeordneten Abschnitten beschreiben. Parallel zu jedem der vertikalen Abschnitte, an dessen Innenseite, verläuft ein Trägerarm, der seinerseits über ein Gelenkscharnier beweglich am Querbalken des Greifers angelenkt ist. An jedem Trägerarm sind aufblasbare Kissen vorgesehen, die mit Druckluft gefüllt die Trägerarme gegen innen wegdrücken (womit sie sich, da sie ihrerseits auf den Trägerarmen angeordnet sind, ebenfalls gegen innen bewegen) so dass die Ware ergriffen wird.

Diese bekannten Greifer besitzen den Nachteil des starren Aufbaus, z. Bsp. mit der Folge, dass sie nur in vertikaler Lage einsetzbar sind.

Die Aufgabe der vorliegenden Erfindung besteht in der Schaffung eines pneumatischen Greifers, der in Herstellung und Anwendung einfach und kostengünstig ist, und dessen Konstruktionsprinzip so beschaffen ist, dass er sowohl als kinetisches als auch als dynamisches Werkzeug vielfältig ausgestaltet und variiert werden kann und seine Aufgabe in beliebiger, auch nicht vertikaler Lage und unter auch schwierigen Randbedingungen erfüllt.

Der Greifer soll verschiedene Anforderungen wie Sterilisierbarkeit und das Handling empfindlicher Gegenstände, beispielsweise in Verbindung mit einem Handling-Roboter, erfüllen können. Zu diesen Anforderungen gehört auch die einfache Austauschbarkeit eines beispielsweise verschmutzten oder sonstwie kontaminierten Exemplars.

Die Lösung der gestellten Aufgabe ist wiedergegeben im kennzeichnenden Teil des Patentanspruches 1 hinsichtlich ihrer Hauptmerkmale, in den folgenden Patentansprüchen hinsichtlich weiterer vorteilhafter Ausbildungen.

Eine vorteilhafte Ausbildung eines erfindungsgemässen pneumatischen Aktors ist insbesondere dadurch gekennzeichnet, dass
- dieser aufgebaut ist aus mehreren, miteinander verbundenen Lagen aus Folienzuschnitten (22) einer flexiblen, jedoch wenig dehnbaren gasdichten Folie (1),
- die Lagen der Folienzuschnitte (22) so miteinander verbunden sind, dass Folienhohlkörper (2) entstehen,
- mindestens einer der Folienhohlkörper (2) einen Anschluss (8) für Druckgas aufweist,
- die so aufgebauten Folienhohlkörper (2) alle miteinander verbunden sind, so dass beim Befüllen der Folienhohlkörper (2) mit Druckgas diese miteinander verbundenen Folienhohlkörper (2) als Aktor (24) eine Schwenkbewegung ausführen.

Anhand der beigefügten Zeichnungen wird der Erfindungsgegenstand näher erläutert.

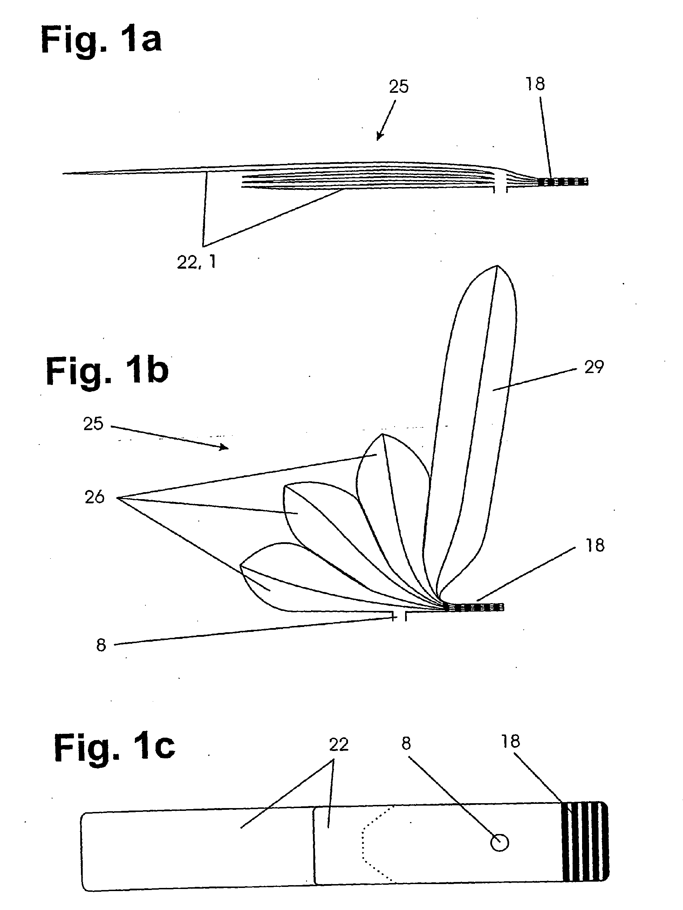

Es zeigen
- Fig. 1a: einen pneumatischen Aktor im unaufgeblasenen Zustand,
- Fig. 1b: einen pneumatischen Aktor im druckmittelgefüllten Zustand,
- Fig. 1 c: einen pneumatischen Aktor in der Draufsicht,
- Fig. 2: ein pneumatischer Aktor als einblättrigen Greifer,
- Fig. 3a: einen zweiblättrigen Greifer im leeren Zustand in Seitenansicht,
- Fig. 3b: einen zweiblättrigen Greifer im druckmittelgefüllten Zustand.
- Fig. 4: einen typischen Folienzuschnitt eines dreiblättrigen Greifers,
- Fig. 5a,b: weitere Folienzuschnitte des dreiblättrigen Greifers
- Fig. 6: einen dreiblättrigen Greifer im aktivierten, also druckmittelgefüllten Zustand in einer Isometrie,
- Fig. 7: ein einzelnes Blatt eines dreiblättrigen Greifers in Seitenansicht,
- Fig. 8: ein einzelnes Blatt gem. Fig. 7 als einblättriger Greifer,
- Fig. 9: einen dreiblättrigen Greifer ohne Grundplatte.

Fig. 1a,b,c ist die Darstellung eines ersten Ausführungsbeispiels der erfindungsgemässen Vorrichtung; Fig. 1a eine Seitenansicht im drucklosen Zustand, Fig. 1b eine solche im druckgasgefüllten Zustand, Fig. 1c eine Draufsicht von unten (bezüglich Fig. 1a) in drucklosem Zustand. Dieses Ausführungsbeispiel ist - wie auch die nachfolgenden - aufgebaut aus Folienzuschnitten 22 einer flexiblen, aber nur wenig dehnbaren, gasdichten Folie 1, die im Querschnitt eine fächerförmige Struktur bilden. Diese Folie kann auch eine textil-armierte Kunststoff-Folie sein. An den Rändem sind diese Folienzuschnitte 22 durch Schweissen oder Kleben jeweils verbunden und so gasdicht gegen die Umgebung abgeschlossen. Die so gebildeten Folienhohlkörper 2 sind untereinander durch Luftkanäle verbunden. Durch einen geeignet geformten Anschluss 8 kann nun Druckgas eingelassen werden, dadurch werden die einzelnen Folienhohlkörper 2 auseinander gedrückt. Wird diese Bewegung auf einer Seite der Folienhohlkörper 2 beschränkt, so ändert sie sich in eine Schwenkbewegung, worauf sich die - aus den Folienzuschnitten 22 aufgebaute und nach aussen gasdichte - Struktur als Aktor 25 verformt, wie in Fig. 1b gezeigt.

Fig. 1c zeigt den Aufbau des Aktors, in Bezug auf Fig. 1a, von unten gesehen. Ausgezogen sind die Berandungen der Folienzuschnitte 22, gestrichelt dargestellt sind die inneren Berandungen der Folienausschnitte 22 von mehreren Follenhohlkörpem 26, 29, die durch die inneren Berandungen der entsprechenden Folienzuschnitte 22 gebildet werden.

In allen drei Fig. 1a,b,c sind die Folienzuschnitte 22 beispielsweise am geschlossenen Ende aufeinandergelegt und miteinander verschweisst oder verklebt.

Dadurch wird eine gemeinsame Kante 18 gebildet, wo der Aktor 25 beispielsweise an einer stillstehenden oder beweglichen äusseren Vorrichtung befestigt werden kann. Zwingend ist dies jedoch keineswegs: Durch geeignete Mittel und Massnahmen kann auch der Anschluss 8 oder, wieder als Beispiel, die Unterseite eines - hier des untersten - der Folienhohlkörper 26 festgehalten werden. Wesentlich ist die relative Schwenkbewegung der Folienhohlkörper 26 und 29.

Der so gestaltete Aktor 25 kann nun - immer im Sinne eines Anwendungsbeispiels - als kinetischer Aktor eingesetzt werden, beispielsweise zum Unterbrechen einer Lichtschranke oder als optischer Signalgeber. Der längste der - hier vier - Folienhohlkörper 29 kann verhältnismässig lang ausgeführt sein, da im druckgasgefüllten Zustande aus diesem Folienhohlkörper 29 ein im Wesentlichen rundes Rohr mit grosser Steifigkeit entsteht.

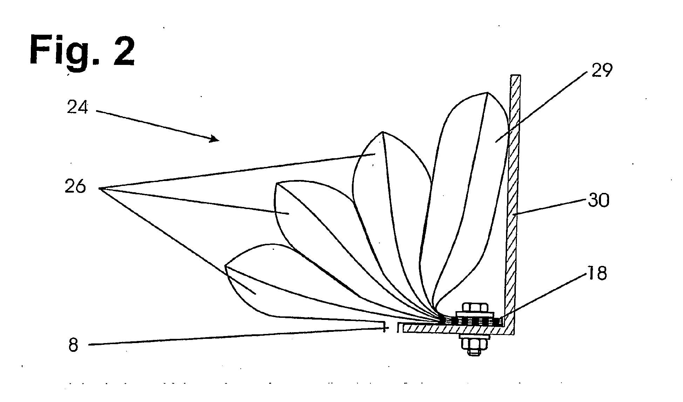

Wird der Folienhohlkörper 29 etwa gleich lang ausgeführt wie die anderen - hier drei - Folienhohlkörper 26, so kann daraus auch ein Kräfte ausübender Aktor 24 gebaut werden, wie in Fig. 2, entsprechend Fig. 1b, dargestellt, ein sogenannter dynamischer Aktor. Die genannte Schwenkbewegung wird zum Greifen oder Halten von Objekten benutzt. Hier ist die Stelle 23, die Verschweissung oder Verklebung der Folienzuschnitte 22, an einem Bauelement 30 befestigt, welches stellvertretend als Winkel dargestellt ist. Dem mit konstruktiven Aufgaben betrauten Fachmann werden viele andere Bauformen zur Verfügung stehen, mit welchen der Kraft- und Momentenschluss des Aktors 24 mit einem dem Bauelement 30 entsprechenden vollzogen werden kann. Eine solche Kombination von Aktor 24 und Bauelement 30 eignet sich beispielsweise als Greifer für blattartige, also im Wesentlichen zweidimensional ausgedehnte Körper.

Da sowohl Aktor 24 als auch Aktor 25 sehr kleine träge Massen aufweisen, sind die mit deren Beschleunigung verbundenen Trägheitskräfte sehr gering: Schnelles Greifen und Lösen sind damit leicht möglich.

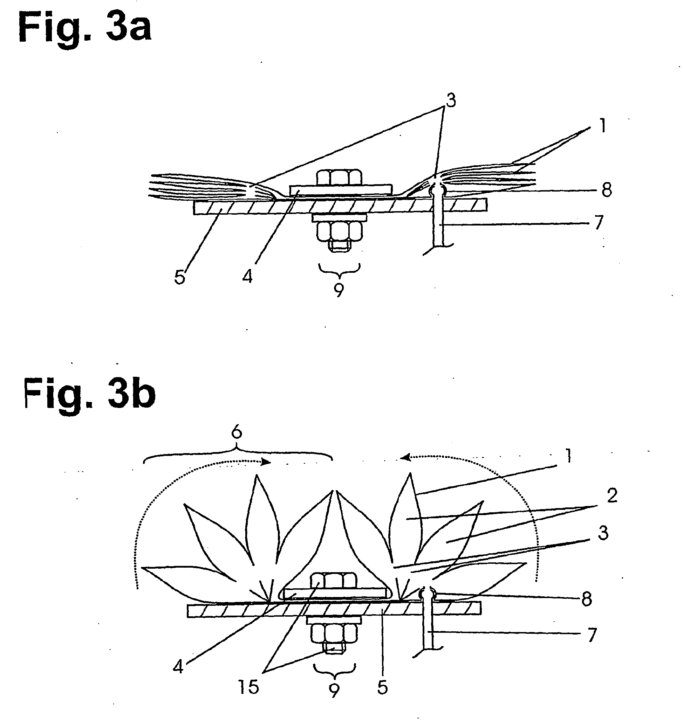

Fig. 3a,b zeigen ein drittes Ausführungsbeispiel eines erfindungsgemässen Aktors. Hier sind zwei Aktoren 24 zusammengebaut, wobei mit dem Ziel rationeller Herstellung jeweils beide Teile der gleichen Ebene an einem Stück geschnitten werden. In Fig. 3a,b sind die beiden Aktoren 24 mittels eines Befestigungselementes 9 (hier stellvertretend eine Schraube mit Mutter) auf eine Grundplatte fixiert. Zusammen bilden die Aktoren 24 einen Greifer, wiederum vorzugsweise für flächige Objekte.

Ein Greifer wird aus einem oder mehreren Aktoren 24, 31 gebildet, die Greiferelemente 6 genannt werden. Im Gegensatz zu herkömmlichen Greifern, wo Aktoren und Greifer separate Bauteile sind, sind diese hier in einem Element vereint.. Diejenige Fläche des Greiferelementes 6, die das zu greifende Objekt berührt, wird Greiffläche 10 genannt. In mindestens einem der Folienhohlkörper 2 die der Grundplatte 5 am nächsten sind, ist ein Anschluss 8 für Druckgas vorhanden. Möglichkeiten für einen solchen Anschluss sind mehrere bekannt; beispielsweise kann eine Schlaucholive an der Druckluftzufuhr 7 oder eine druckknopfartige Schnellkupplung verwendet werden. Es sind keine mechanischen Teile wie Stifte, Schrauben, Sicherungen etc. vorhanden, wodurch eine Gefahr durch deren Herausfallen oder sonstige Malfunktion ausgeschlossen werden kann.

Durch Regulieren der durchfliessenden Gasmenge bzw. des Drucks kann die Greifkraft sehr genau und hysteresefrei eingestellt und dosiert werden. Die Greiferelemente können sehr genau positioniert werden, da der Greifvorgang Ruck- und Druckspitzenfrei (stick-slipfrei) erfolgt. Die übliche Ungenauigkeit beim Positionieren mit Hydraulik-Zylindern entfällt. Die dafür nötigen Druck- oder Durchfluss-Sensoren und die Steuerung sind ausserhalb des Greifers, beispielsweise an einem Handling-Roboter angebracht, wodurch ein Greifer unabhängig von diesen ausgetauscht werden kann.

Die aufblasbaren Folienhohlkörper 2 behalten eine gewisse Flexibilität, was ein grossflächiges, elastisches Greifen empfindlicher Objekte 20 oder solcher mit komplexen Formen ermöglicht. Da die durch den Greifer auf den Körper ausgeübte Kraft nicht punktförmig, sondern auf eine dem Objekt angepasste Fläche verteilt ausgeübt wird, wird die punktuelle Beanspruchung des Objektes vermindert. Durch die grosse Kontaktfläche kann schon mit geringem Fülldruck eine grosse Haltekraft erreicht werden. Durch die Verwendung von spezialisierten Oberflächen 15, 16, 17 kann die Haltekraft noch vergrössert werden. Auch ist es denkbar, solche Oberflächenbereiche durch eine Schutzfolie bzw. durch eine andere geeignete Verstärkung vor z.Bsp. mechanischer oder chemischer Beschädigung zusätzlich zu schützen. Die Flexibilität der Greiffläche 10 ermöglicht es auch, denselben Greifer für verschiedene Objekte zu verwenden. Da er sich dem Objekt teilweise anpasst, muss kein spezialisierter Greifer verwendet werden, der nur für einen einzigen Objekttyp passt. Bei zusätzlicher Verstärkung der Oberflächenbereiche 15, 16, 17 kann die Anpassungsfähigkeit erhalten werden, in dem z.Bsp. beweglich miteinander verbundene Platten zur Verstärkung vorgesehen werden. Auch sind objektbedingte Verstärkungen in der Art des angepassten "Fingerhuts" möglich, was immer noch erlaubt, dank der Anpassungsfähigkeit des Greifers einen nicht spezialisierten Greifer, dann für spezielle Objekte durch einen angepassten Fingerhut verstärkt, zu verwenden.

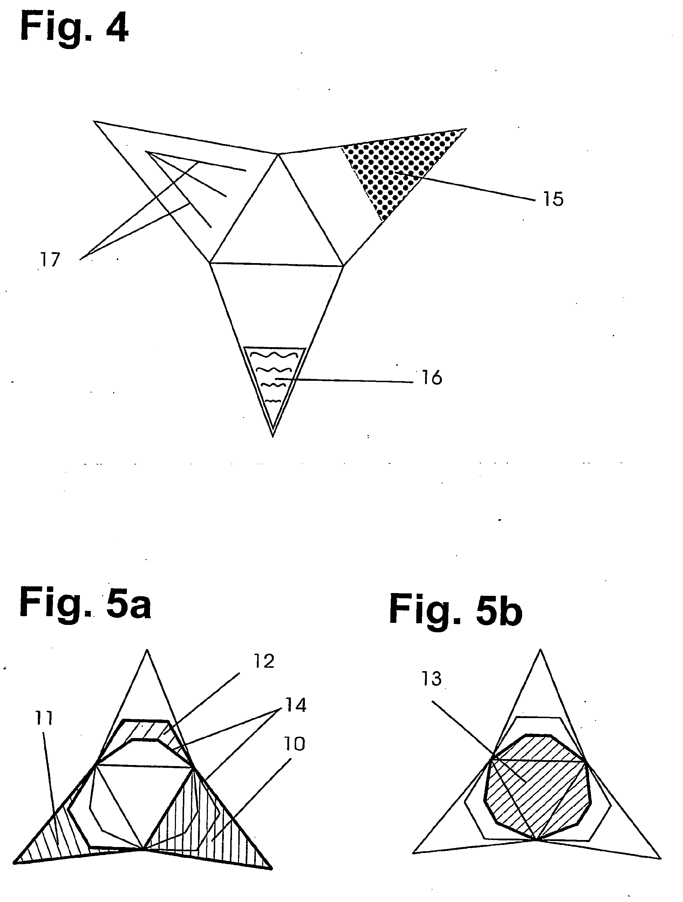

Das in Fig. 4 bis 6 dargestellte Ausführungsbeispiel von erfindungsgemässen Aktoren ist analog zu jenen von Fig. 1 bis 3 aufgebaut. Anstelle einer Spiegelsymmetrie der Aktoren gemäss Fig. 3a,b tritt eine mehrzählige, beispielsweise dreizählige Axialsymmetrie. Hier sind drei Aktoren 31 zu einem Greifer zusammengefügt.

Die erfindungsgemässen Aktoren 31 sind aus übereinander liegenden KunststoffFolien 1, die miteinander an vorgegebenen Nähten 14 verbunden sind, aufgebaut. Diese Verbindung kann wiederum durch Schweissen oder Kleben erfolgen. Das verwendete Material erlaubt eine einfache Dampf- oder Strahlensterilisation. Solche zu einem Greifer zusammengebaute Aktoren 31 können in eine Verpackung eingeschweisst und steril ausgeliefert werden. Die Herstellung dieser Aktoren 31 ist einfach und deshalb kostengünstig, da es sich bei den verwendeten Kunststoff-Folien 1 um ein ebenes Material handelt, das mit ebenen Schweiss- oder Klebeverbindungen aneinander gefügt werden kann. Zusammen mit den geringen Materialkosten ermöglicht dieses Konstruktionsprinzip die Herstellung von Greifern zu so tiefen Preisen, dass sie als Wegwerfartikel verwendet werden können. Der ganze Greifer wird aus einem einzigen Material gefertigt, was die Entsorgung denkbar einfach macht. Daher kann ein kontaminierter Greifer einfach durch einen neuen sterilen ausgetauscht werden. Aufwändige Reinigungs- und Sterilisations-Verfahren, wie sie bei herkömmlichen mechanischen Greifern notwendig sind, erübrigen sich. Bei industriellen Anwendungen, bei denen Greifer verschmutzt werden, erspart deren Austausch aufwändige und kostenintensive Reinigungsverfahren. Korrosionsschäden durch andauernden Kontakt mit aggressiven Medien können ausgeschlossen werden. Durch das Austauschen erübrigen sich auch Wartungsarbeiten, die bei einem mechanischen Greifer durch Abnutzungserscheinungen notwendig würden. Das Wegfallen sämtlicher Wartungs- und Reinigungsarbeiten am Greifer vereinfacht den Betrieb wesentlich und spart einen grossen Teil der Kosten ein, die bei einem herkömmlichen Greifer anfallen würden.

Die Einsatzbereiche für einen solchen pneumatischen Greifer sind vielfältig, nicht zuletzt auch darum, weil er in den verschiedensten Grössen im Meter- bis zum Millimeterbereich hergestellt werden kann und einsetzbar ist Seine Vorzüge machen ihn zudem für alle Bereiche ideal, wo reines oder steriles Arbeiten gefragt ist, wie im pharmazeutischen Bereich oder in Analyselabors. Keimfreiheit ist auch im Lebensmittelbereich ein wichtiger zu erfüllender Punkt. In Biotechnologie- oder Chemieanwendungen können Kontaminationsprobleme eliminiert werden, da ein kontaminierter Greifer einfach ausgetauscht und entsorgt werden kannIn Industriebereichen, wo der Greifer stark aggressiven Medien ausgesetzt oder stark verschmutzt wird, wie beispielsweise durch Sprühnebel bei Lackierarbeiten, und die Reinigung aufwändig wäre, entfällt diese. Kostenintensive Reparaturarbeiten wegen Abnutzung fallen weg. Durch seine rein pneumatische Funktionsweise erfüllt er auch die Anforderungen für Arbeitsbereiche, in denen Ex-Schutz (Explosionsschutz) erforderlich ist.

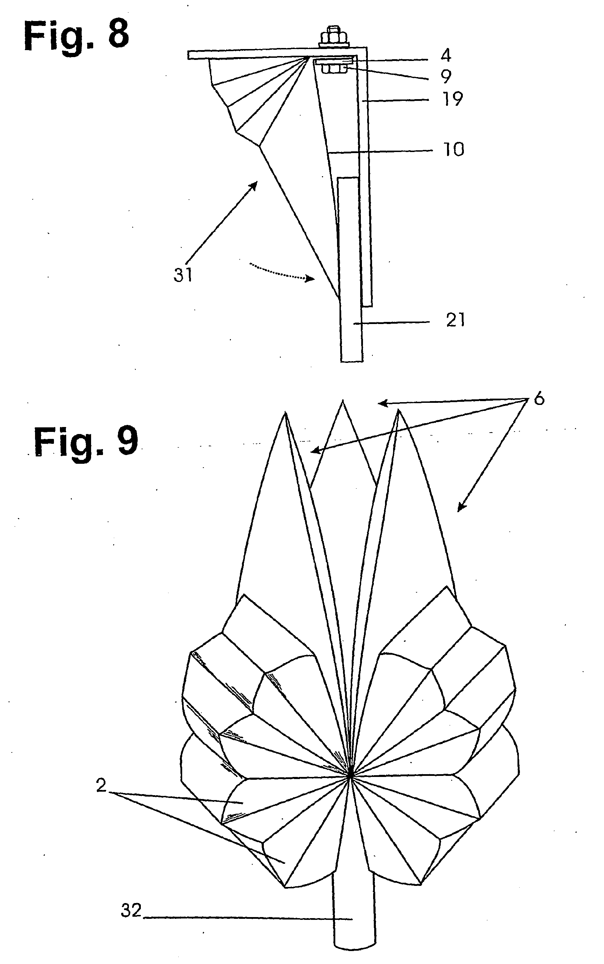

Weiter ist der Aufbau des erfindungsgemässen Greifers gerade für den Einsatz in kontaminierten Bereichen ideal. Kontaminierte Bereiche sind, unter Laborbedingen oder unter Produktionsbedingungen, häufig räumlich abgetrennte Bereiche, die über spezielle Werkzeuge ferngesteuert von aussen bedient werden. Müssen Öffnungen in Abschrankungen oder Wänden vorgesehen werden, die kontaminierte Bereiche (oder rein bzw. steril zu haltende Bereiche) abtrennen, sind diese so klein wie möglich auszubilden. Durch geeignete Ausbildung der Folienhohlkörper bzw. durch geeignetes Zusammenfalten und gegebenenfalls durch miniaturisierte Ausführung eines erfindungsgemässen Greifers, wie er beispielhaft in Fig. 9 dargestellt ist, kann dieser durch Öffnungen hindurchgeführt werden, die klein sind im Vergleich zu den aufgeblasenen Greiferelementen 6 und klein sind im Vergleich zu den zu ergreifenden Objekten.

Drucksensoren und Steuerungseinrichtung sind verglichen mit dem Greifer teuer. Damit der Greifer unabhängig von diesen ausgetauscht werden kann, sind sie ausserhalb des Greifers angebracht. Als Befestigungselement 9 um den Niederhalter 4 sowie die Folien 1 auf der Grundplatte 5 zu befestigen kann beispielsweise eine Schraube oder ein Druckknopf verwendet werden. Die Verwendung einer Schnellkupplung, beispielsweise in Form eines Druckknopfes, macht den Austausch des Greifers sehr einfach.

Die Grundstruktur eines aus drei Aktoren 31 aufgebauten Greifers gemäss Fig. 4, 5, 6 besteht aus polygonalen Elementen. Dieser Aufbau behindert eine Bewegung des Greifers in einer anderen als der gewünschten Bewegungsrichtung (durch einen Pfeil dargestellt), ohne dass dafür externe, stabilisierende Elemente angebracht werden müssten. Beispielsweise verhindern die dreieckigen Grundstrukturen des in Fig. 4 gezeigten 3-Finger Greifers ein Verdrehen der Greiferelemente 6 um ihre Längsachse. Ausgehend von der Konfiguration des Greifers gemäss den Figuren 4, 5 und 6 ist der Fachmann in der Lage, auch die Aktoren bzw. Greifer gemäss den anderen Ausführungsbeispielen derart auszubilden, dass externe, stabilisierende Elemente entfallen können. Dies unterstützt die flexible Einsatzfähigkeit solch eines Aktors bzw. Greifers, z.Bsp. dort, wo starre externe, flexible Elemente aus Platzgründen den Einsatz eines Aktors bzw Greifers verhindern. So wird etwa ein Greifer gemäss den Figuren 3a und 3b dann die Greiferelemente 6 ohne externe, stabilisierende Elemente nur in der gewünschten, durch die Pfeile angedeuteten Bewegungsrichtung bewegen, wenn das als Schraube mit Mutter ausgebildete Befestigungselement 9 geeignet positioniert ist; dies wiederum ist der Fall, wenn die Mutter bzw. die in der Figur dargestellte Unterlagesscheibe beide Greiferelemente 6 symmetrisch (d.h. genau mittig) festklemmt. Ein Greifer gemäss Figur 1a bis 1c wird eine stabile Bewegungsrichtung aufweisen, wenn die Folienhohlkörper 26, 29 am Rand 18 auf der ganzen Breite fest miteinander verbunden sind und auch, wenn der greifende Folienhohlkörper 29 schmäler ausgebildet ist, als der anschliessende Folienhohlkörper 26. Dann ruht der Körper 29 mittig im Körper 26, drückt diesen ebenfalls mittig ein, so dass der Körper 26 über seine seitlichen Randbereiche den Körper 29 seitlich stützt, was für diesen eine stabilisierende Stützwirkung im Sinn der gewollten Bewegungsrichtung ergibt. Diese stabilisierende Wirkung kann noch verbessert werden, wenn der jeweils nächste Körper 26 breiter ausgeführt ist als der vorgehende Körper 26.

Es ergibt sich, dass durch geeignete Konzeption der Anzahl der Folienhohlkörper 29,29;10,12,13 in Verbindung mit deren Form (polygonal, nicht poygonal; schmäler oder breiter gegenüber einem anderen solchen Körper) sowie deren gegenseitiger Befestigung (z.Bsp. über die gesamte Breite des jeweiligen Körpers oder nicht) das optimale Resultat im Hinblick auf die gewünschte Greifbewegung bzw. - richtung und auf die gewünschte Grifflage erzielt werden kann. Ein Greifer lässt sich so gezielt für einen bestimmten Verwendungszweck optimieren.

Der Präzisierung halber sei angefügt Die unteren, der Grundplatte 5 näher liegenden Folienhohlkörper 2 sind zur Verbesserung der Effizienz in ihrer Länge gekürzt.

Die Anzahl der verwendeten Aktoren 31 für einen Greifer kann dem Verwendungszweck angepasst werden: um flächige oder ebene Objekte 21 zu greifen eignet sich ein 2-Fingergreifer gemäss Fig. 3 oder ein 1-Fingergreifer gem. Fig 2, 8 der das Objekt 21 gegen ein Gegenstück 19 drückt.

In Fig. 8 ist eine erfindungsgemässe Ausführung eines 1-Finger-Greifers mit einem Aktor 31 dargestellt, mit welchem ein ebenes Objekt 21 gegen ein Gegenstück 19 gedrückt wird. Die Ausgestaltung des Gegenstücks 19 ist nicht Bestandteil der Erfindung; sie kann nach der Natur des Objektes 21 und jener des Maschinen-Elementes gestaltet sein, auf welches ein so gearteter Greifer aufgesetzt werden soll.

Der Aktor 31 ist hier auf dem Gegenstück 19 - als Winkel ausgeführt - befestigt, das gleichzeitig als Grundplatte dient und den Kraftfluss zum Aktor 31 schliesst. Auf dem Gegenstück 19 kann ein Kraftmesser, beispielsweise in Form eines Dehnmessstreifens, angebracht werden. Für eher zylindrische oder sphäroidische Körper eignen sich Greifer mit drei oder mehr Aktoren 31 gemäss Fig. 4 besser, da ein Weggleiten des Körpers in zur Grundplatte 5 tangentialer Richtung verhindert wird.

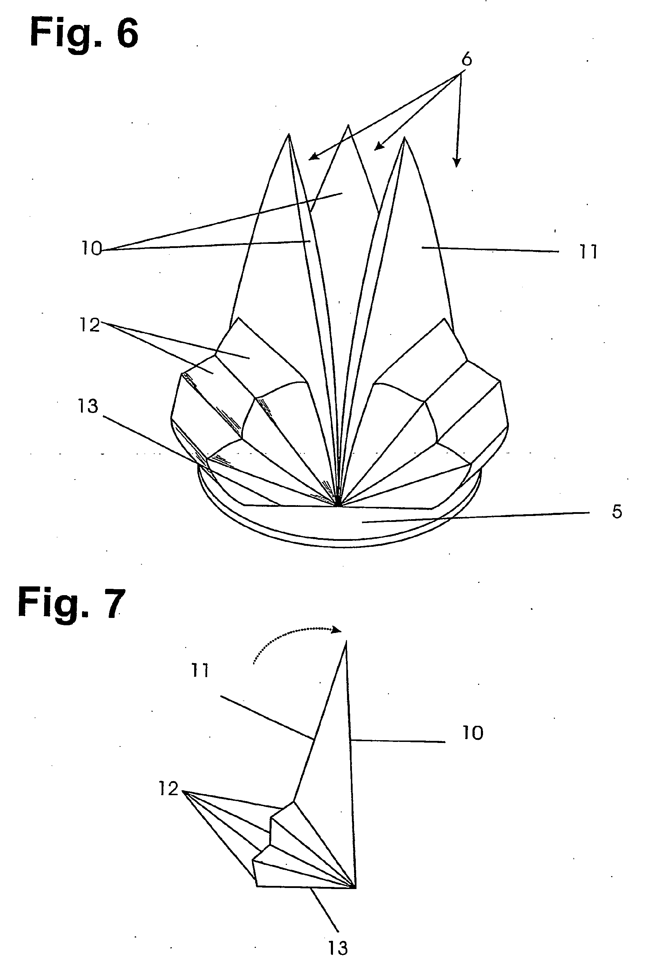

Fig. 6 zeigt einen Greifer aus drei Aktoren 31 in Isometrie, die Fig. 5a und 5b zeigen die Grundrisse von Folien 1, aus denen dieser aufgebaut ist. Dabei stellen die dick ausgezogenen, die Flächen umrahmenden, Linien die Nahtlinien 14 dar. Nicht dargestellt ist ein in der Praxis notwendiger Schweisszugaberand. Fig. 7 zeigt in Seitenansicht, wie die in Fig. 5a, b dargestellten Folienzuschnitte 22 zu einem Aktor 31 aneinander gefügt sind. Greiffläche 10 ist diejenige, die das zu greifende Objekt berührt. Fläche 11 bildet die Aussenfläche des Folienhohlkörpers 2 der von Fläche 11 und der Greiffläche 10 gebildet wird. Die Flächen 12 bilden eine faltenbalgähnliche Struktur und Fläche 13 bildet die Grundfläche 13 des Greifers, die die Grundplatte 5 berührt.

Eine Variante zum Ausführungsbeispiel der Aktoren 31 als Greifer ist in Fig. 9 dargestellt. In diesem Ausführungsbeispiel ist die Grundplatte gemäss Fig. 3 ersetzt durch mindestens einen oder auch mehrere weitere Folienhohlkörper 2 je Greiferelement 6. Beim Befüllen der Aktoren 31 mit Druckgas wird dieser nach unten ausgeschwenkt, und die drei Aktoren 31 drücken im unteren Teil gegeneinander. Damit bewirken sie ebenfalls einen Kraft- und Momentenschluss.
In Fig. 9 ist die mittlere Region der drei Aktoren 31 wiederum mit einem Befestigungselement 9 (nicht dargestellt) an einem mechanischen Bauelement 32 - hier im Sinne eines Beispiels an einem Rohr - befestigt, welches einerseits den Kraftschluss zum gegriffenen Objekt, anderseits auch die Zufuhr und Abfuhr von Druckgas sicherstellt. Die Ausgestaltung des Bauelementes 32 ist wiederum nicht Bestandteil der erfindungsgemässen Vorrichtung, und kann dem Verwendungszweck entsprechend geformt und ausgeführt sein.

## Patentansprüche

1. Pneumatischer Greifer (24), mit mindestens einem aktiven Greifelement, **dadurch gekennzeichnet, dass**
■ dieses aufgebaut ist aus mehreren, miteinander verbundenen Lagen aus Folienzuschnitten (22) einer flexiblen, jedoch wenig dehnbaren gasdichten Folie (1),
■ die Lagen der Folienzuschnitte (22) so miteinander verbunden sind, dass Folienhohlkörper (2) entstehen,
■ mindestens einer der Folienhohlkörper (2) einen Anschluss (8) für Druckgas aufweist,
■ die so aufgebauten Folienhohlkörper (2) alle miteinander verbunden sind, so dass beim Befüllen der Folienhohlkörper (2) mit Druckgas diese miteinander verbundenen Folienhohlkörper (2) als aktives Greifelement eine Greifbewegung ausführen,
■ das mindestens eine Greifelement selbst derart ausgebildet ist, dass seine Greifbewegung ohne externe, stabilisierende Elemente in einer anderen als der gewünschten Bewegungsrichtung behindert wird und/oder seine Greifbewegung und Grifflage durch Lage und Ausbildung der Folienhohlkörper (2) selbst definiert wird.

2. Pneumatischer Greifer (24) nach Anspruch 1, **dadurch gekennzeichnet**, nur ein Folienhohlkörper (2) vorgesehen ist, der beim Befüllen mit Druckgas die Schwenkbewegung ausführt.

3. Pneumatischer Greifer (24) nach Anspruch 1 oder 2, **dadurch gekennzeichnet, dass** ein Griff unmittelbar über mindestens eine durch einen Folienhohlkörper (2) gebildete Greiffläche (10) erfolgt.

4. Pneumatischer Greifer (24) nach Anspruch 3, **dadurch gekennzeichnet, dass** die mindestens eine Greiffläche (10) Verstärkungen gegen mechanischen oder chemischen Angriff aufweist.

5. Pneumatischer Greifer (24) nach Patentanspruch 1, **dadurch gekennzeichnet, dass**
■ die Lagen der Folienzuschnitte (22) entlang von Nahtlinien (14) miteinander verbunden sind,
■ die Folienhohlkörper (2) an einer gemeinsamen Kante (18) miteinander verbunden sind, um die sie beim Befüllen mit Druckgas eine Schwenkbewegung ausführen.

6. Pneumatischer Greifer (24) nach Patentanspruch 1, **dadurch gekennzeichnet, dass** die Folie (1) eine textilarmierte Kunststoff-Folie ist.

7. Pneumatischer Greifer (24) nach Patentanspruch 6, **dadurch gekennzeichnet, dass** die Verbindung der Folienzuschnitte (22) durch Schweissen oder Kleben bewirkt ist.

8. Pneumatischer Greifer (24) nach Patentanspruch 1, **dadurch gekennzeichnet, dass** der Aktor ein 1-blättriger Aktor (25) ist, gebildet aus mindestens zwei miteinander verbundenen Folienhohlkörpern (2), der an einer gemeinsamen Kante (18) oder an einem der Folienhohlkörpern. (26, 29) mit einer stillstehenden oder beweglichen äusseren Vorrichtung befestigt ist.

9. Pneumatischer Greifer (25) nach Patentanspruch 8, **dadurch gekennzeichnet, dass** der äusserste Folienhohlkörper (29), welcher die grösste Schwenkbewegung ausführen kann, länger ausgeführt ist, als die anderen Folienhohlkörper (26), und damit als kinetischer Aktor zur optischen Signalgebung verwendet werden kann.

10. Pneumatischer Greifer mit mindestens einem Aktor (24) nach Patentanspruch 8, **dadurch gekennzeichnet, dass**
- ein feststehendes oder bewegliches mechanisches Element 30 vorhanden ist, auf welchem der Greifer befestigt ist,
- ein Anschluss für Druckgas vorhanden ist,
- die auf den Greifer ausgeübten Kräfte und Momente einseitig auf dieses mechanische Element abgeleitet werden können,
- der mindestens eine Aktor (24) beim Befüllen mit Druckgas eine Schwenkbewegung ausführt,
womit der Greifer zum Greifen von Objekten verwendet werden kann.

11. Pneumatischer Greifer nach Patentanspruch 10, **dadurch gekennzeichnet, dass**
- das feststehende oder bewegliche mechanische Element eine Grundplatte (5) ist, auf welcher der Greifer befestigt ist, und die auf den Greifer ausgeübten Kräfte und Momente einseitig abgeleitet werden können,
- ein Gegenstück (19) vorhanden und mit der Grundplatte (5) im Kraft- und Momentenschluss ist,
- der von der Grundplatte (5) am weitesten entfernte Folienhohlkörper (29) im Druckmittelbeaufschlagten Zustande gegen das Gegenstück (19) drückt,
womit der einblättrige Greifer zum Greifen von flachen Objekten verwendet werden kann.

12. Pneumatischer Greifer nach Patentanspruch 10, **dadurch gekennzeichnet, dass**
- zwei pneumatische Aktoren (24) vorhanden sind, die an einem gemeinsamen feststehenden oder beweglichen mechanischen Element (30) befestigt sind,
- die zwei Aktoren (24) im druckmittelbeaufschlagten Zustande gegeneinander schwenken und damit einen 2-blättrigen Greifer bilden, mit welchem flache Objekte gegriffen werden können,
- die Folienhohlkörper (26) beider Aktoren (24) jeweils aus je zwei einstückigen Folienzuschnitten (22) gefertigt sind,
womit der zweiblättrige Greifer zum Greifen von flachen Objekten verwendet werden kann.

13. Pneumatischer Greifer nach Patentanspruch 12, **dadurch gekennzeichnet, dass** das feststehende oder bewegliche mechanische Element eine Grundplatte (5) ist, auf welcher der Greifer befestigt ist, und auf welche auf den Greifer ausgeübten Kräfte und Momente abgeleitet werden können.

14. Pneumatischer Greifer nach Patentanspruch 10, **dadurch gekennzeichnet, dass**
- mindestens drei Aktoren (24) vorhanden sind, die mit einem gemeinsamen Befestigungselement (9) auf demselben feststehenden oder beweglichen mechanischen Element befestigt sind,
- die mindestens drei Aktoren (25) im druckmittelbeaufschlagten Zustande gegeneinander schwenken und damit einen mindestens 3-blättrigen Greifer bilden
- die Folienhohlkörper (26) der drei Aktoren (24) jeweils aus je zwei einstückigen Folienzuschnitten (22) gefertigt sind,
womit der mindestens 3-blättrige Greifer zum Greifen von dreidimensionalen Objekten verwendet werden kann.

15. Pneumatischer Greifer nach Patentanspruch 14, **dadurch gekennzeichnet, dass** das feststehende oder bewegliche mechanische Element eine Grundplatte (5) ist, auf welcher der Greifer befestigt ist, und auf welche auf den Greifer ausgeübten Kräfte und Momente abgeleitet werden können.

16. Pneumatischer Greifer nach Patentanspruch 10 **dadurch gekennzeichnet, dass**
- das bewegliche oder feststehende Element ein Rohr (32) ist, auf welchem der Greifer befestigt ist,
- dieses Rohr (32) gleichzeitig der Druckgaszufuhr dient,
- der Kraftschluss ohne eine Grundplatte über zusätzliche Folienhohlkörper (2) erzeugt ist.

17. Pneumatischer Greifer nach Anspruch 1, **dadurch gekennzeichnet, dass** die Folienhohlkörper (2, 26,29; 10,12,13) verschiedene Breite aufweisen, derart, dass die gewünschte Greifbewegung in der vorbestimmten Bewegungsrichtung stabilisiert wird, wobei vorzugsweise die gegenseitige Befestigung der Folienhohlkörper derart ausgebildet ist, dass die Greifbewegung in einer anderen als der gewünschten Bewegungsrichtung behindert wird.

## Claims

1. A pneumatic gripper (24) with at least one active gripping element, **characterised in that**
■ the same is constructed from a plurality of mutually connected layers made up of film blanks (22) of a flexible yet little elastic gas-tight film (1),
■ the layers of the film blanks (22) are connected to one another in such a manner that film hollow bodies (2) develop,
■ at least one of the film hollow bodies (2) has a connector (8) for pressurised gas,
■ the thus-constructed film hollow bodies (2) are all connected to one another so that when filling the film hollow bodies (2) with pressurised gas, these mutually connected film hollow bodies (2) execute a gripping movement as active gripping element,
■ the at least one gripping element itself is constructed in such a manner that the gripping movement thereof in a direction different from the desired movement direction is prevented without external stabilising elements and/or the gripping movement and gripping position thereof are determined by the position and construction of the film hollow bodies (2) themselves.

2. The pneumatic gripper (24) according to Claim 1, **characterised in that** only one film hollow body (2) is provided, which executes the pivoting movement during filling with pressurised gas.

3. The pneumatic gripper (24) according to Claim 1 or 2, **characterised in that** gripping takes place directly via at least one gripping surface (10) formed by means of a film hollow body (2).

4. The pneumatic gripper (24) according to Claim 3, **characterised in that** the at least one gripping surface (10) has reinforcements against mechanical or chemical attack.

5. The pneumatic gripper (24) according to Patent Claim 1, **characterised in that**
■ the layers of the film blanks (22) are connected to one another along seam lines (14),
■ the film hollow bodies (2) are connected to one another at a common edge (18) in order to execute a pivoting movement during filling with pressurised gas.

6. The pneumatic gripper (24) according to Patent Claim 1, **characterised in that** the film (1) is a textile-reinforced plastic film.

7. The pneumatic gripper (24) according to Patent Claim 6, **characterised in that** the connection of the film blanks (22) is realised by means of welding or adhesive bonding.

8. The pneumatic gripper (24) according to Patent Claim 1, **characterised in that** the actuator is a single-bladed actuator (25) formed from at least two mutually connected film hollow bodies (2), which is fixed at a common edge (18) or at one of the film hollow bodies (26, 29) to a stationary or movable external device.

9. The pneumatic gripper (25) according to Patent Claim 8, **characterised in that** the outermost film hollow body (29), which can execute the largest pivoting movement, is realised longer than the other film hollow bodies (26) and thus can be used as kinetic actuator for optical signalling.

10. The pneumatic gripper with at least one actuator (24) according to Patent Claim 8, **characterised in that**
- a fixed or movable mechanical element 30, on which the gripper is fixed, is present,
- a connector for pressurised gas is present,
- the forces and torques exerted on the gripper can be dissipated on one side onto this mechanical element,
- the at least one actuator (24) executes a pivoting movement during filling with pressurised gas,
whereby the gripper can be used for gripping objects.

11. The pneumatic gripper according to Patent Claim 10, **characterised in that**
- the fixed or movable mechanical element is a base plate (5), on which the gripper is fixed and the forces and moments exerted on the gripper can be dissipated on one side,
- a counterpart piece (19) is present and is in non-positive and torque engagement with the base plate (5),
- the film hollow body (29) most distant from the base plate (5) presses against the counterpart piece (19) in the pressure-loaded state,
whereby the single-bladed gripper can be used for gripping flat objects.

12. The pneumatic gripper according to Patent Claim 10, **characterised in that**
- two pneumatic actuators (24) are present, which are fixed on a common fixed or movable mechanical element (30),
- the two actuators (24) pivot against one another in the pressure-loaded state and thus form a 2-bladed gripper, with which flat objects can be gripped,
- the film hollow bodies (26) of both actuators (24) are in each case assembled from two one-piece film blanks (22),
whereby the two-bladed gripper can be used for gripping flat objects.

13. The pneumatic gripper according to Patent Claim 12, **characterised in that** the fixed or movable mechanical element is a base plate (5), on which the gripper is fixed and onto which forces and moments exerted on the gripper can be dissipated.

14. The pneumatic gripper according to Patent Claim 10, **characterised in that**
- at least three pneumatic actuators (24) are present, which are fixed with a common fixing element (9) on the same fixed or movable mechanical element,
- the at least three actuators (25) pivot against one another in the pressure-loaded state and thus form an at least 3-bladed gripper,
- the film hollow bodies (26) of the three actuators (24) are in each case assembled from two one-piece film blanks (22),
whereby the at least 3-bladed gripper can be used for gripping three-dimensional objects.

15. The pneumatic gripper according to Patent Claim 14, **characterised in that** the fixed or movable mechanical element is a base plate (5), on which the gripper is fixed and onto which forces and moments exerted on the gripper can be dissipated.

16. The pneumatic gripper according to Patent Claim 10, **characterised in that**
- the movable or fixed mechanical element is a tube (32), on which the gripper is fixed,
- this tube (32) is simultaneously used for pressurised-gas supply,
- the non-positive engagement is created without a base plate by means of additional film hollow bodies (2).

17. The pneumatic gripper according to Claim 1, **characterised in that** the film hollow bodies (2, 26, 29; 10, 12, 13) have various widths such that the desired gripping movement in the predefined movement direction is stabilised, wherein the mutual fixing of the film hollow bodies is preferably constructed in such a manner that the gripping movement in a direction different from the desired movement direction is prevented.

## Revendications

1. Pince (24) pneumatique, comprenant au moins un élément de préhension actif, **caractérisée en ce que**
■ celui-ci est constitué de plusieurs couches reliées les unes aux autres et à base de coupes de film (22) d'un film (1) flexible, étanche au gaz, mais moins extensible,
■ les couches des coupes de film (22) sont reliées les unes aux autres de telle sorte que des corps creux de film (2) se forment,
■ au moins l'un des corps creux de film (2) présente un branchement (8) pour le gaz sous pression,
■ les corps creux de film (2) ainsi mis en place sont tous reliés les uns aux autres, de sorte que, lors du remplissage des corps creux de film (2) avec du gaz sous pression, ces corps creux de film (2) reliés les uns aux autres exécutent un mouvement de préhension en tant qu'élément de préhension actif,
■ lequel au moins un élément de préhension même est conçu de telle sorte que son mouvement de préhension sans éléments externes et stabilisateurs dans un autre sens de mouvement que le sens souhaité et/ou son mouvement de préhension et sa position de prise sont définis par la position et la conception des corps creux de film (2) même.

2. Pince (24) pneumatique selon la revendication 1, **caractérisé en ce qu'**il est prévu seulement un corps creux de film (2) qui exécute le mouvement de basculement lors du remplissage avec du gaz sous pression.

3. Pince (24) pneumatique selon la revendication 1 ou 2, **caractérisé en ce qu'**une prise s'effectue directement par au moins une surface de préhension (10) formée par un corps creux de film (2).

4. Pince (24) pneumatique selon la revendication 3, **caractérisé en ce que** la au moins une surface de préhension (10) présente des renforts contre une attaque mécanique ou chimique.

5. Pince (24) pneumatique selon la revendication 1, **caractérisé en ce que**
■ les couches des coupes de film (22) sont reliées les unes aux autres le long de lignes de soudure (14) .
■ les corps creux de film (2) sont reliés les uns aux autres sur une arête (18 commune, autour de laquelle ils exécutent un mouvement de basculement lors du remplissage avec du gaz sous pression.

6. Pince (24) pneumatique selon la revendication 1, **caractérisé en ce que** le film (1) est un film plastique armé avec du textile.

7. Pince (24) pneumatique selon la revendication 6, **caractérisé en ce que** la liaison des coupes de film (22) est effectuée par soudage ou collage.

8. Pince (24) pneumatique selon la revendication 1, **caractérisé en ce que** l'actionneur est un actionneur (25) à une lame, formé par au moins deux corps creux de film (2) reliés l'un à l'autre, lequel est fixé sur une arête (18) commune ou sur l'un des corps creux de film (26, 29) avec un dispositif extérieur fixe ou mobile.

9. Pince pneumatique (25) selon la revendication 8, **caractérisée en ce que** le corps creux de film (29) extérieur, qui peut exécuter le plus grand mouvement de basculement, est réalisé plus long que les autres corps creux de film (26), et donc comme actionneur cinétique pour la génération de signaux optiques.

10. Pince pneumatique comprenant au moins un actionneur (24) selon la revendication 8, **caractérisée en ce que**
- un élément (30) mécanique fixe ou mobile est présent, sur lequel la pince est fixée,
- un branchement pour du gaz sous pression est présent,
- les forces et couples exercés sur la pince peuvent être déviés par un côté sur cet élément mécanique,
- le au moins un actionneur (24) exécute un mouvement de basculement lors du remplissage avec du gaz sous pression,
de sorte que la pince peut être utilisée pour la préhension d'objets.

11. Pince pneumatique selon la revendication 10, **caractérisée en ce que**
- l'élément mécanique fixe ou mobile est une plaque de base (5), sur laquelle la pince est fixée, et les forces et couples exercés sur la pince peuvent être déviés par un côté,
- une pièce inverse (19) est présente et est en conjugaison de force et de couple avec la plaque de base (5),
- le corps creux de film (29) le plus éloigné de la plaque de base (5) appuie contre la pièce inverse (19) dans l'état sollicité par moyen de pression,
la pince à une lame pouvant être utilisée pour la saisie d'objets plats.

12. Pince pneumatique selon la revendication 10, **caractérisée en ce que**
- deux actionneurs (24) pneumatiques sont présents, lesquels sont fixés sur un élément (30) mécanique commun fixe ou mobile,
- les deux actionneurs (24) basculent l'un par rapport à l'autre dans l'état sollicité par agent de pression et forment ainsi une pince à deux lames, qui permet de saisir des objets plats,
- les corps creux de film (26) des deux actionneurs (24) sont fabriqués chacun à partir de deux coupes de film (22) d'un seul tenant,
la pince à deux lames pouvant être utilisée pour la saisie d'objets plats.

13. Pince pneumatique selon la revendication 12, **caractérisée en ce que** l'élément mécanique fixe ou mobile est une plaque de base (5), sur laquelle la pince est fixée, et sur laquelle des forces et des couples exercés sur la pince peuvent être déviés.

14. Pince pneumatique selon la revendication 10, **caractérisée en ce que**
- au moins trois actionneurs (24) sont présents, lesquels sont fixés avec un élément de fixation (9) commun sur le même élément mécanique fixe ou mobile,
- les au moins trois actionneurs (25) basculent les uns par rapport aux autres dans l'état sollicité par agent de pression et forment donc une pince avec au moins 3 lames,
- les corps creux de film (26) des trois actionneurs (24) sont fabriqués chacun à partir de deux coupes de film (22) d'un seul tenant,
de sorte que la pince à au moins 3 lames peut être utilisée pour la saisie d'objets tridimensionnels.

15. Pince pneumatique selon la revendication 14, **caractérisée en ce que** l'élément mécanique fixe ou mobile est une plaque de base (5), sur laquelle la pince est fixée, et sur laquelle des forces et des couples exercés sur la pince peuvent être déviés.

16. Pince pneumatique selon la revendication 10, **caractérisée en ce que**
- l'élément mobile ou fixe est un tuyau (32), sur lequel la pince est fixée,
- ce tuyau (32) sert en même temps à l'alimentation en gaz sous pression,
- la conjugaison de force est générée sans une plaque de base au moyen de corps creux de film (2) supplémentaires.

17. Pince pneumatique selon la revendication 1, **caractérisée en ce que** les corps creux de film (2, 26, 29 ; 10, 12, 13) présentent différentes largeurs, de telle sorte que le mouvement de préhension souhaité est stabilisé dans le sens de déplacement prédéfini, sachant que de préférence la fixation réciproque des corps creux de film est conçue de sorte que le mouvement de saisie dans un autre sens de déplacement que le sens de déplacement souhaité est empêché.
